# EUROPEAN PATENT APPLICATION

(11) **EP 3 059 568 A1**
(43) Date of publication of application: **24.08.2016**
(21) Application number: 16154841.7
(22) Date of filing: 09.02.2016
(51) Int. Cl.: G01L 23/22, G01M 15/12

(54) **SIGNAL RECORDING OF KNOCKING CONDITIONS USING A KNOCK SENSOR**

(30) Priority: 19.02.2015 US 201514626385
(71) Applicant: General Electric Company, Schenectady, NY 12345 (US)
(72) Inventor: BIZUB, Jeffrey Jacob, Waukesha, WI 53188 (US); BURANT, John Michael, Waukesha, WI 53188 (US)
(74) Representative: Williams, Andrew Richard

(57) **Abstract**

A system including a controller (25). The controller (25) is configured to obtain a signal from a knock sensor (25) coupled to a reciprocating device (10). The controller (25) is configured to analyze the signal to determine a trigger event occurrence based on the signal having an abnormal signature. The abnormal signature is associated with a knocking of the reciprocating device (10). The controller (25) is further configured to generate a first audio file of a first audio recording to store in a memory of the controller (25). The first audio recording provides an indication of the knocking of the reciprocating device (10).

## Description

### BACKGROUND

The subject matter disclosed herein relates to knock sensors, and more specifically, to recording signals from knock sensors mounted to large, multi-cylinder reciprocating devices (e.g., combustion engines, compressors, etc.).

Combustion engines typically combust a carbonaceous fuel, such as natural gas, gasoline, diesel, and the like, and use the corresponding expansion of high temperature and pressure gases to apply a force to certain components of the engine, e.g., piston disposed in a cylinder, to move the components over a distance. Each cylinder may include one or more valves that open and close correlative with combustion of the carbonaceous fuel. For example, an intake valve may direct an oxidizer such as air into the cylinder, which is then mixed with fuel and combusted. Combustion fluids, e.g., hot gases, may then be directed to exit the cylinder via an exhaust valve. Accordingly, the carbonaceous fuel is transformed into mechanical motion, useful in driving a load. For example, the load may be a generator that produces electric power.

Knock sensors can be used to monitor multi-cylinder combustion engines. A knock sensor can be mounted to the exterior of an engine cylinder and used to determine whether or not the engine is running properly. Sometimes an operator will have difficulty confirming the knocking detected by the knock sensor. For instance, a knock may be too quiet or otherwise go unnoticed by the operator. Accordingly, there is a need to have a way for operators to confirm the knocking occurrence.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a controller configured to obtain a signal from a knock sensor coupled to a reciprocating device, analyze the signal to determine a trigger event occurrence based on the signal having an abnormal signature, wherein the abnormal signature is associated with a knocking of the reciprocating device, and generate a first audio file of a first audio recording to store in a memory of the controller, wherein the first audio recording provides an indication of the knocking of the reciprocating device.

A second embodiment includes one or more non-transitory computer-readable media encoding one or more processor-executable routines wherein the one or more routines, when executed by a processor of a controller of a reciprocating device, cause acts to be performed including obtaining a signal from a knock sensor coupled to the reciprocating device, analyzing the signal to determine a trigger event occurrence based on the signal having an abnormal signature, wherein the abnormal signature is associated with a knocking of the reciprocating device, and generating an audio file of an audio recording to store in a memory of the controller, wherein the audio recording provides an indication of the knocking of the reciprocating device.

In a third embodiment, a method includes obtaining a signal from a knock sensor coupled to the reciprocating device, analyzing the signal to determine a trigger event occurrence based on the signal having an abnormal signature, wherein the abnormal signature is associated with a knocking of the reciprocating device, generating an audio file of an audio recording of the controller, wherein the audio recording provides an indication of the knocking of the reciprocating device, and storing the audio file in a look up table on a memory.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of an engine driven power generation system in accordance with aspects of the present disclosure;
FIG. 2 is a side cross-sectional view of an embodiment of a piston assembly in accordance with aspects of the present disclosure;
FIG. 3 is a sample plot of a combustion signature and a valve signature over a first complete intake, compression, combustion and exhaust cycle in accordance with aspects of the present disclosure;
FIG. 4 is a block diagram of the engine control unit of the piston assembly of FIG. 2, in accordance with aspects of the present disclosure;
FIG. 5 is a flow chart of a process performed by the processor of the engine control unit of FIG. 4, in accordance with an embodiment of the present disclosure; and
FIG. 6 is another flow chart of a process performed by the processor of the engine control unit of FIG. 4, in accordance with an embodiment of the present disclosure.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The techniques described herein include the use of one or more knock sensor systems and methods that may detect an undesired knocking condition in a reciprocating device, such as a combustion engine or compressor. When using a knock sensor to monitor a combustion engine, occasionally the knock sensor system detects a knock, such as an abnormal or undesired noise. Rather than ignore and discard the unidentifiable noises, it may be advantageous to save recordings of unidentifiable noises for analysis at a later date or time. For instance, the knock sensor may detect a knocking that is inaudible or goes unnoticed to an operator. In some embodiments, the knock sensor may be used to shut down the engine to avoid damage to the engine. If the engine is shut down and the operator does not hear the knocking detected by the knock sensor, the operator may believe the knock sensor is operating improperly. Accordingly, the present disclosure is directed to a system and method that addresses a need for operators to confirm engine knocking. Further, having a log of characterized identified noises greatly increases the utility of the data set. Accordingly, the recorded noises can be compared and/or stored with other noises in a look up table (e.g., table in a database, excel spreadsheet, or other table stored in memory).

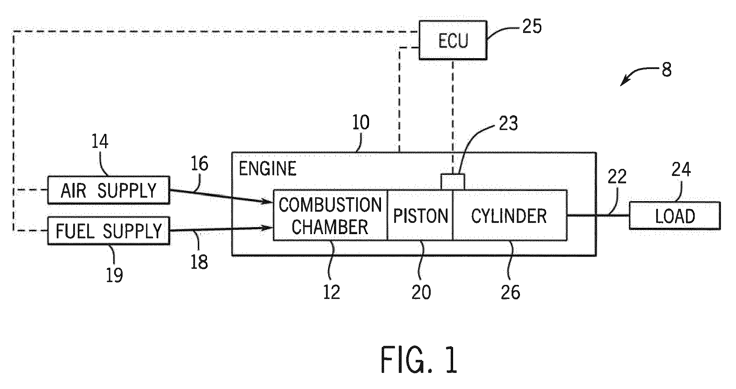

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). The techniques described herein may also be applicable to other reciprocating devices, such as compressors. An air supply 14 is configured to provide a pressurized oxidant 16, such as air, oxygen, oxygen-enriched air, oxygen-reduced air, or any combination thereof, to each combustion chamber 12. The combustion chamber 12 is also configured to receive a fuel 18 (e.g., a liquid and/or gaseous fuel) from a fuel supply 19, and a fuel-air mixture ignites and combusts within each combustion chamber 12. The hot pressurized combustion gases cause a piston 20 adjacent to each combustion chamber 12 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. The system 10 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The driven power generation system 8 may include one or more knock sensors 23 suitable for detecting engine "knock." The knock sensor 23 may sense vibrations caused by the engine, such as vibration due to detonation, pre-ignition, and or pinging. The knock sensor 23 is shown communicatively coupled to an engine control unit (ECU) 25. During operations, signals from the knock sensor 23 are communicated to the ECU 25 to determine if knocking conditions (e.g., pinging) exist. The ECU 25 may then adjust certain engine 10 parameters to ameliorate or avoid the knocking conditions. For example, the ECU 25 may adjust ignition timing and/or adjust boost pressure to avoid the knocking. As further described herein, the knock sensor 23 may additionally derive that certain vibrations should be further analyzed and categorized to detect, for example, undesired engine conditions.

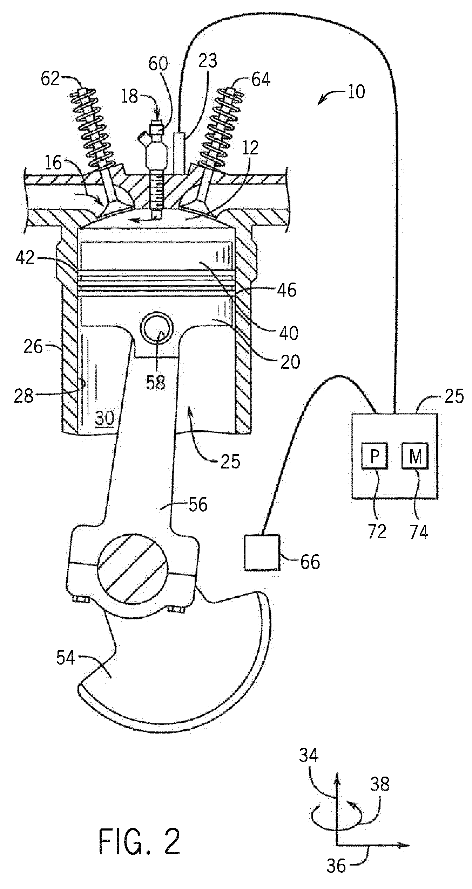

FIG. 2 is a side cross-sectional view of an embodiment of a piston assembly 25 having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land). The top portion 40 generally blocks the fuel 18 and the air 16, or a fuel-air mixture, from escaping from the combustion chamber 12 during reciprocating motion of the piston 20.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 12 is positioned adjacent to the top land 40 of the piston 24. A fuel injector 60 provides the fuel 18 to the combustion chamber 12, and an intake valve 62 controls the delivery of air 16 to the combustion chamber 12. An exhaust valve 64 controls discharge of exhaust from the engine 10. However, it should be understood that any suitable elements and/or techniques for providing fuel 18 and air 16 to the combustion chamber 12 and/or for discharging exhaust may be utilized, and in some embodiments, no fuel injection is used. In operation, combustion of the fuel 18 with the air 16 in the combustion chamber 12 cause the piston 20 to move in a reciprocating manner (e.g., back and forth) in the axial direction 34 within the cavity 30 of the cylinder 26.

During operations, when the piston 20 is at the highest point in the cylinder 26 it is in a position called top dead center (TDC). When the piston 20 is at its lowest point in the cylinder 26, it is in a position called bottom dead center (BDC). As the piston 20 moves from top to bottom or from bottom to top, the crankshaft 54 rotates one half of a revolution. Each movement of the piston 20 from top to bottom or from bottom to top is called a stroke, and engine 10 embodiments may include two-stroke engines, three-stroke engines, four-stroke engines, five-stroke engine, six-stroke engines, or more.

During engine 10 operations, a sequence including an intake process, a compression process, a power process, and an exhaust process typically occurs. The intake process enables a combustible mixture, such as fuel and air, to be pulled into the cylinder 26, thus the intake valve 62 is open and the exhaust valve 64 is closed. The compression process compresses the combustible mixture into a smaller space, so both the intake valve 62 and the exhaust valve 64 are closed. The power process ignites the compressed fuel-air mixture, which may include a spark ignition through a spark plug system, and/or a compression ignition through compression heat. The resulting pressure from combustion then forces the piston 20 to BDC. The exhaust process typically returns the piston 20 to TDC while keeping the exhaust valve 64 open. The exhaust process thus expels the spent fuel-air mixture through the exhaust valve 64. It is to be noted that more than one intake valve 62 and exhaust valve 64 may be used per cylinder 26.

The depicted engine 10 also includes a crankshaft sensor 66, the knock sensor 23, and the engine control unit (ECU) 25, which includes a processor 72 and memory 74. The crankshaft sensor 66 senses the position and/or rotational speed of the crankshaft 54. Accordingly, a crank angle or crank timing information may be derived. That is, when monitoring combustion engines, timing is frequently expressed in terms of crankshaft 54 angle. For example, a full cycle of a four stroke engine 10 may be measured as a 720° cycle. The knock sensor 23 may be a Piezo-electric accelerometer, a microelectromechanical system (MEMS) sensor, a Hall effect sensor, and/or any other sensor designed to sense vibration, acceleration, sound, and/or movement.

Because of the percussive nature of the engine 10, the knock sensor 23 may be capable of detecting signatures even when mounted on the exterior of the cylinder 26. However, the knock sensor 23 may be disposed at various locations in or about the cylinder 26. Additionally, in some embodiments, a single knock sensor 23 may be shared, for example, with one or more adjacent cylinders 26. In other embodiments, each cylinder 26 may include one or more knock sensors 23. The crankshaft sensor 66 and the knock sensor 23 are shown in electronic communication with the engine control unit (ECU) 25. The ECU 25 includes a processor 72 and a memory 74. The memory 74 may store computer instructions that may be executed by the processor 72. The ECU 25 monitors and controls operation of the engine 10, for example, by adjusting combustion timing, valve 62, 64, timing, adjusting the delivery of fuel and oxidant (e.g., air), and so on.

Advantageously, the techniques described herein may use the ECU 25 to receive signals (e.g., data) from the crankshaft sensor 66 and the knock sensor 23, and then to create a "noise" signature by plotting the knock sensor 23 signals against the crankshaft 54 position. The ECU 25 may then go through the process of analyzing the data to derive normal (e.g.., known and expected noises) and abnormal signatures (e.g., unknown or unexpected noises).

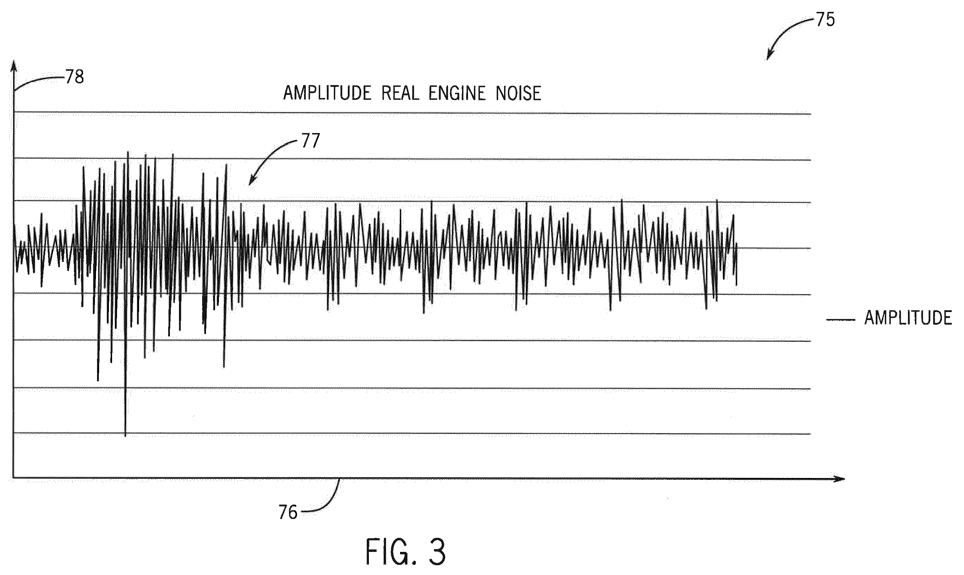

For example, FIG. 3 is an embodiment of a raw engine noise plot 75 derived (e.g., by the ECU 25) of noise signals measured by the knock sensor 23 in which x-axis 76 is crankshaft 54 position, which is correlative of time. The data related to plot 75 may be generated when the ECU 25 combines the data received from the knock sensor 23 and the crankshaft sensor 66 during operation of the engine 10. While the plot 75 is depicted in FIG. 3, the signals may simply be processed by the ECU 25 without generating the plot 75. In the depicted embodiment, an amplitude curve 77 of the knock sensor 23 signal is shown, with an amplitude axis 78. That is, the amplitude curve 77 includes amplitude measurements of vibration signals (e.g., noise or sound data) sensed via the knock sensor 23 plotted against crank angle. It should be understood that this is merely a plot of a sample data set, and not intended to limit plots generated by the ECU 25. The curve 77 may then be scaled for further processing.

The knock sensor may detect undesirable, unknown, or unexpected vibrations (e.g., knocking) that an operator may miss or not hear. For instance, the ECU 25 may access a reference signature (e.g., signal or pattern) stored in the memory 74. The ECU 25 may compare the reference signature to the noise signature of the knock sensor 23. For example, if the knock sensor signal amplitude exceeds the reference signal, the ECU 25 may determine that knocking has occurred. As such, it may be desirable to generate an audio file of an audio recording and/or store the audio file in the memory 74 to provide evidence to the operator of the engine 10 knocking. The audio recording may provide an indication to the operator that the engine is knocking. Accordingly, the stored signals may be used as proof of the knocking. Moreover, the signals may be used for further diagnostics discussed below.

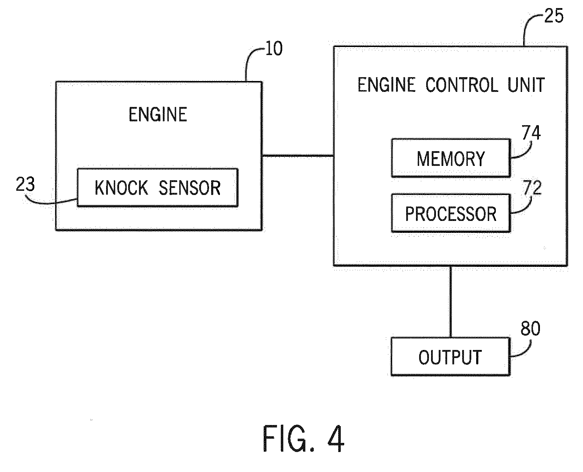

FIG. 4 is a block diagram of the ECU 25 communicatively coupled to the knock sensor 23 of the engine 10, in accordance with an embodiment of the present disclosure. The ECU 25 may include the processor 72 or multiple processors, the memory 74, and inputs/outputs (i.e., I/O), such as output 80. The processor 72 may include multiple microprocessors, one or more "general-purpose" microprocessors, one or more special-purpose microprocessors, and/or one or more application specific integrated circuits (ASICS), system-on-chip (SoC) device, or some other processor configuration. For example, the processor 58 may include one or more reduced instruction set (RISC) processors or complex instruction set (CISC) processors. The processor 72 may be operatively coupled to the memory 74 to execute instructions for carrying out the presently disclosed techniques. These instructions may be encoded in programs or code stored in a tangible non-transitory computer-readable medium, such as the memory 74 and/or other storage. The memory 74, in the embodiment, includes a computer readable medium, such as, without limitation, a hard disk drive, a solid state drive, diskette, flash drive, a compact disc, a digital video disc, random access memory (RAM and/or flash RAM), and/or any suitable storage device that enables the processor 72 to store, retrieve, and/or execute instructions (e.g., software or firmware for storing knocking audio) and/or data (e.g., knocking audio files). The memory 74 may include one or more local and/or remote storage devices. The ECU 25 may include a wide variety of I/O.

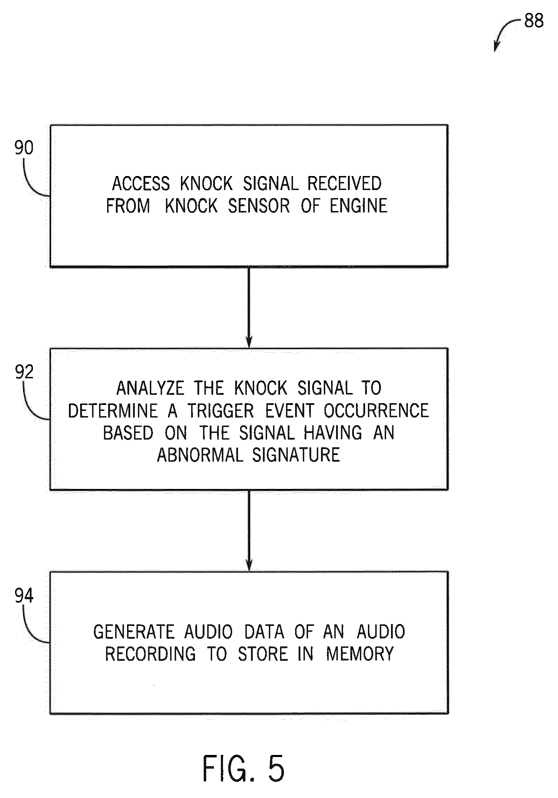

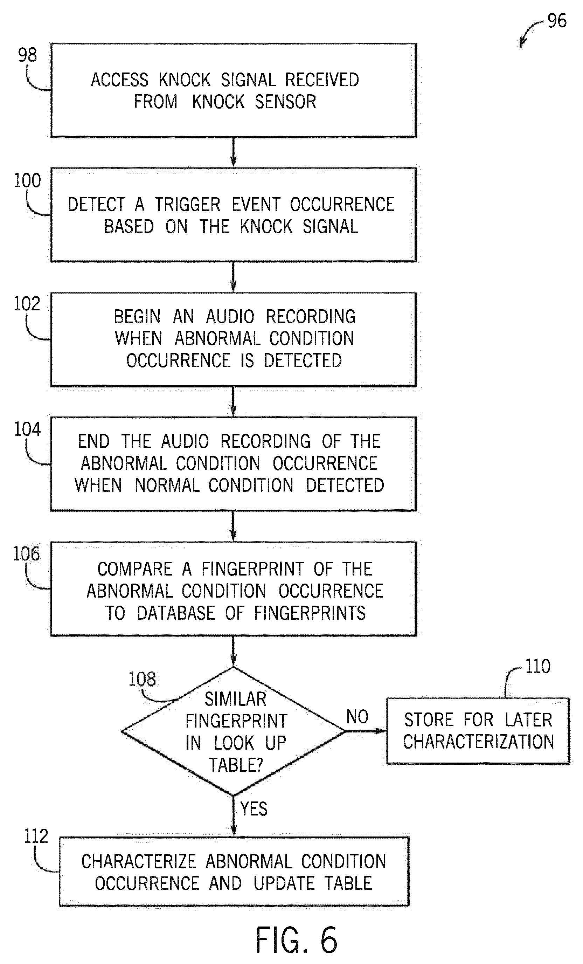

The processor 72 of the ECU 25 may be configured to generate signals (e.g., audio signals, data signals, etc.) related to the audio file to output to a flash drive, a workstation (e.g., a display of a workstation), another electronic control unit, or any suitable device for receiving signals related to the audio file. For instance, the audio signals or diagnostic information may be sent over a controller area network (CAN). The ECU 25 may transmit and/or receive messages (e.g., audio recordings) using any suitable wireless or wired protocol. Accordingly, while the processes in FIGS 5 and 6 are described with the processor 72 of the ECU 25 performing all the steps, one or more steps may be performed by another electronic device (e.g., a workstation) once an audio file is created.

FIG. 5 is a flow chart of a process 88 that may be performed by the processor 72 (e.g., running code) of FIG. 4 to enable the ECU 25 to generate an audio recording of the knock signals. The process 88 may be stored in the memory 74 of the ECU 25 and executed as instructions by the processor 72. The ECU 25 may begin by receiving knock signals from the knock sensor 23, such as noise signals, vibration signals, acceleration signals, movement signals, or the like. The processor 72 may then access the knock signals received from the knock sensor 23 of the engine 10 (block 90). The processor 72 may analyze the signal by detecting or identifying a trigger event occurrence based on an abnormal signature (e.g., abnormal vibration, abnormal noise/sound, abnormal acceleration, abnormal motion, etc.) associated with the knock signals from the knock sensor 23 (block 92). That is, the trigger event occurrence may be an occurrence of any suitable signal from the knock sensor that indicates a knocking has occurred by analyzing signal amplitude, frequency, harmonics, or the like. The trigger event occurrence may be time stamped with a time associated with the knocking. The abnormal signature may be correspond to a knocking or other mechanical failure. Any method suitable for identifying/detecting trigger events may be used to detect abnormal vibrations. For instance, vibrations of normal signals may be compared with the knock sensor signals using thresholds (e.g., thresholds of certain frequencies), six sigma statistics, Bayesian statistics, or AI/neural networks, or any suitable method of detecting abnormal vibrations associated with engine knocking. Alternatively and/or additionally, a reference pattern may be compared to the noise pattern to determine a relative likelihood of the abnormal signature indicating a knocking occurrence. For instance, if a knock sensor signal amplitude exceeds data points on FIG. 3 corresponding to a similar crank angle (e.g., the same crank angle or within a preset range of the crank angle), it may indicate that engine knocking is likely. Alternatively and/or additionally, the processor 72 may utilize pattern matching, for example, based on frequency or timelength of the event. The processor 72 may continue by generating data (e.g., an audio file) of an audio recording of the knocking of the engine. Data of the audio recording may be stored on the memory 72, a hard disk drive, a solid state drive, diskette, flash drive, a compact disc, a digital video disc, random access memory (RAM and/or flash RAM), proprietary device and/or any suitable storage device for storing an audio recording. The audio may also be stored in another location on the CAN. The audio recording may be stored in a .wav, .mp3, or other proprietary file format. The audio file may be small (e.g., 12-128 bits), large (e.g., 128 bits - 5MB), or larger. An advantage of a small audio files may be that they are easier to compare. In addition to storing the audio file, the audio data may be used to create signatures associated with different engine conditions.

FIG. 6 is a flow chart of another process 96 that may be performed by the processor 72 (e.g., running code) of FIG. 4. The process 88 may be stored in the memory 74 of the ECU 25 and executed as instructions by the processor 72. The processor 72 may begin by accessing knocking signals received from a knock sensor 23 (block 98). The processor 72 may continue by detecting a trigger event occurrence based on the knock signal (block 100). For example, the trigger event may be associated with an abnormal signature. When an abnormal signature is detected, the trigger event may be utilized by the processor 72 (e.g., as an interrupt, event, function, process, etc.) to begin an audio recording when the abnormal signature is detected (block 102). The audio recording may provide an indication of the knocking of the engine 10. For instance, the audio recording may include an audible knocking of the engine 10 and/or the vibration signals associated with the abnormal signature. The knocking may be related to the abnormal signature associated with mechanical failure. When normal conditions are detected (e.g., an end of the trigger event), the processor 72 may end the audio recording of the abnormal signature (block 104), thereby recording the knocking noise associated with the abnormal signature. The normal conditions may be based on conditions when knocking is unlikely to occur. For instance, the processor 72 may begin recording and/or end recording based on an indication that there is a likelihood (e.g., probability within a certain range, such as above 50%) that an abnormal signature was detected. Further, the processor 72 may record after the trigger event has occurred, when the trigger event occurs, or when the trigger event is likely to occur in the future. Additionally and/or alternatively, the recording of the abnormal condition and/or normal condition may be based on a predetermined amount of time. For instance, once the abnormal condition is detected, the recording may occur for a predetermined amount of time (e.g., each recording lasts 5 seconds). As further example, once the abnormal condition is detected, the recording may continue until a normal condition is detected for a predetermined amount of time.

As discussed with respect to FIG. 5, the processor 72 may then store an audio file of the audio recording in the memory 74 or another storage. Alternatively and/or additionally, the audio file may be stored in a look up table (e.g., database, spreadsheet, or data structure). The look up table may be a table of audio files, audio data, vibration data, or the like. For instance, the look up table may be a dictionary of noises associated with abnormal signatures detected by the knock sensor 23 of the engine 10. The look up table may be used to characterize/associate the abnormal signatures with various conditions. The conditions may be utilized to identify a reason or cause of the abnormal signatures. By storing and analyzing the audio files, the conditions and reasons for abnormal signatures may be used to diagnose and enhance products.

After recording the audio file of the abnormal signature, the audio file may be compared to other audio files associated with abnormal signatures (block 106). For instance, a fingerprint of the audio recording may be used to compare with other fingerprints of audio recordings of abnormal signatures. The fingerprints may be based on different frequencies, amplitudes, or the like. If there are no similar fingerprints in the look up table (block 108), the processor may store the audio file/fingerprint for later characterization (block 110). If there are similar fingerprints found (block 108), the processor 72 may continue by characterizing the abnormal signature and updating the look up table (block 112).

In an embodiment of the present disclosure, if a particular engine has a piston that improperly contacts a portion of the cylinder, the processor 72 may access signals received from the knock sensor associated with that particular cylinder. The processor 72 may then determine if the knock signals are related to an abnormal signature or a normal signature. When the improper contact occurs, the processor 72 may detect a trigger event based on the abnormal signature of the knock sensor. When the improper contact begins (i.e. an abnormal signature is detected), the processor 72 may begin to record an audio recording as evidence of the improper contact. When the improper contact ends (i.e. a normal signature is detected), the processor 72 may stop the audio recording. Various frequencies and amplitudes (i.e. fingerprints) associated with the recording may then be compared to the frequencies and amplitudes of the recordings in a database. If the improper contact has occurred in other cases, the recording may then be associated with the piston improperly contacting the cylinder (i.e. condition). The database may then be updated based on the recording.

Technical effects of the disclosed embodiments relate to recording knocking noises in an engine. More particularly, the engine control unit may generate an audio recording or a file of the recording of knocking in an engine. The audio recording may be output to a display or speakers to provide an operator with evidence of knocking in an engine. The engine control unit may detect a trigger event of an abnormal signature and begin recording a knocking of an engine. The engine control unit may stop recording when the abnormal signature stops. The audio recording can be compared to other audio recordings and put into a table based on characteristics of the audio recording. Then an operator can use the recording and/or diagnose problems in the engine based on the recording.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a controller (25) configured to:
obtain a signal from a knock sensor (23) coupled to a reciprocating device (10);
analyze the signal to determine a trigger event occurrence based on the signal having an abnormal signature, wherein the abnormal signature is associated with a knocking of the reciprocating device (10); and
generate a first audio file of a first audio recording to store in a memory of the controller, wherein the first audio recording provides an indication of the knocking of the reciprocating device (10).

2. The system of claim 1, wherein the controller (25) is configured to:
begin the audio recording of the abnormal signature when the abnormal signature is detected; and
end the audio recording of the abnormal signature when a normal signature is detected.

3. The system of claim 1 or 2, wherein the controller (25) is configured to compare a first audio fingerprint of the first audio recording to a second audio fingerprint of a second audio recording in a look up table.

4. The system of claim 3, wherein the second audio fingerprint of the look up table is associated with a condition, wherein the condition provides a reason for an abnormal signature associated with the knocking.

5. The system of any of claims 1 to 4, wherein the audio file is stored in an audio look up table.

6. The system of any preceding claim, wherein the controller (25) is configured to output the audio file to a display or workstation.

7. The system of any preceding claim, wherein the audio file is stored in a .mp3 or a .wav format, and wherein the audio file is between 12 bits and 128 bits.

8. The system of any preceding claim, wherein the knock signal comprises a vibration signal.

9. The system of any preceding claim, wherein the controller (25) includes a memory (74) and wherein the memory (74) comprises flash RAM.

10. A method, comprising:
obtaining a signal from a knock sensor (23) coupled to a reciprocating device (10);
analyzing the signal to determine a trigger event occurrence based on the signal having an abnormal signature, wherein the abnormal signature is associated with a knocking of the reciprocating device (10);
generating an audio file of an audio recording of the controller, wherein the audio recording provides an indication of the knocking of the reciprocating device (10); and
storing the audio file in a look up table on a memory (74).

11. The method of claim 10, wherein the method comprises:
beginning the audio recording when the abnormal signature is detected; and
ending the audio recording of the abnormal signature when a normal signature is detected.

12. The method of claim 10 or 11, comprising comparing the knock signal to a reference signal to detect the abnormal signature.

13. The method of any of claims 10 to 12, comprising displaying the audio file on a display.

14. A computer program comprising computer program code means adapted to perform the method of any of claims 10 to 13, when executed by a computer processor.

15. The computer program of claim 14, embodied on a computer-readable medium.
